# EUROPEAN PATENT SPECIFICATION

(11) **EP 1 735 996 B1**
(45) Date of publication and mention of the grant of the patent: **29.01.2014**
(21) Application number: 05732045.9
(22) Date of filing: 14.04.2005
(51) Int. Cl.: H04W 88/06, H04W 88/02, H04W 76/02, H04W 48/18

(54) **MOBILE TERMINAL WITH WIRED AND WIRELESS NETWORK INTERFACES**
MOBILES ENDGERÄT MIT VERDRAHTETEN UND DRAHTLOSEN NETZWERKSCHNITTSTELLEN
TERMINAL MOBILE A INTERFACE RESEAU CABLEE ET INTERFACE RESEAU HERTZIENNE

(30) Priority: 14.04.2004 US 824662
(43) Date of publication of application: 27.12.2006
(73) Proprietor: Apple Inc., Cupertino, CA 95014 (US)
(72) Inventor: SYLVAIN, Dany, Gatineau, Quebec J8T 6A6 (CA)
(74) Representative: Lang, Johannes
(86) International application number: PCT/IB2005/000994
(87) International publication number: WO 2005/101802

(56) References cited:
- EP-A1- 1 489 801
- EP-A2- 1 265 420
- WO-A1-00/51375
- US-A1- 2004 235 483

## Description

### Field of the Invention

The present invention relates to communications, and in particular to providing a mobile terminal having both wired and wireless network interfaces.

### Background of the Invention

Given the increasing popularity and availability of devices supporting local wireless communications, such as those implementing Bluetooth and 802.11 communication standards, cellular telephones are being configured to support both cellular and local wireless communications. These multimode mobile terminals are able to support communication sessions, including voice-based calls, through cellular or local wireless networks, assuming service is available. The cellular networks use traditional cellular technologies, including Code Division Multiple Access, Time Division Multiple Access, Orthogonal Frequency Division Multiplexing, and other multiple access standards that generally support communications between a local base station and a mobile terminal over an extended range, which is typically greater than that provided by the local wireless networks.

The local wireless communications are not intended to replace cellular communications, but to further enhance and extend the coverage for wireless communications. For example, local wireless networks may be deployed throughout an office or other building complex where cellular coverage is difficult. There is hope that the local wireless and cellular networks will complement one another and provide greater functionality to users. Local wireless networks are generally connected to or otherwise supported by a local area network. Being based on a wireless technology, local wireless networks are more susceptible to intermittent performance variations based on coverage, interference, and capacity. In general, the capacity of a local wireless network is significantly less than that provided by an Ethernet-based local area network. In an effort to alleviate local wireless traffic, there is a need for an effective way to allow mobile terminals to communicate directly over the local area network, without using local wireless communications, when access to the local area network is available to the user of the mobile terminal. In addition to alleviating the burden on the local area network, the user of the mobile terminal will enjoy a more stable and higher performance network connection.

According to the publication W00051375 (A1) a communication system for an organization having multiple sites uses a dual-mode device capable of both cell phone communication and telephone communication on a local area network LAN. IP LANS are established at organization sites such that a temporary IP address is assigned to a dual-mode device that logs onto an organization LAN, and the IP address is associated at a PSTN-connected server on the LAN with the cell phone number of the communication device. The IP server notifies a PSTN-connected routing server when a device logs on to a LAN, and also provides a destination number for the IP server. Cell calls directed to the device are then redirected to the IP server and directed to the device connected to the LAN. No other related prior art is known.

There is a further need to direct communications to the appropriate wired or wireless interface in an automated fashion, depending on the mobile terminal's network connection.

### Summary of the Invention

The present invention provides a mobile terminal capable of supporting both wired and local wireless interfaces to support communications. When a connection to a network via the wired interface is available, the mobile terminal will establish sessions via the wired interface. If communications via the wired interface are not possible, communications are established via the local wireless interface or an optional cellular interface. If existing communications via the wired interface are no longer possible, a new session may be established via the local wireless interface to continue the prior communication. In case of such an event, the communications will be associated with a particular ID, which is used when establishing the new session such that the original communication may continue over the new session.

In one embodiment, the wired interface is configured to connect to an associated communication network via a docking station, which is capable of receiving the mobile terminal. When the mobile terminal is docked in the docking station, communications through the wired interface are provided. When th e mobile terminal is not docked in the docking station, communications may be established via the local wireless interface or an optional cellular interface. The docking station may include a user interface through which the user may provide input indicating that the mobile terminal will be removed from the docking station. If a communication session is established, the signal provided to the mobile terminal from the docking station can trigger the mobile terminal to establish a new session via the local wireless interface to continue the communications.

Separate addresses are associated with the mobile terminal when using the wired and local wireless interfaces in one embodiment. Prior to initiating communications through either type of interface, the mobile terminal may register the appropriate IP address with a service node, which may participate in controlling or establishing communication sessions. Further, the mobile terminal may be configured to obtain these IP addresses from an IP address server, such as when using Dynamic Host Control Protocol.

Those skilled in the art will appreciate the scope of the present invention and realize additional aspects thereof after reading the following detailed description of the preferred embodiments in association with the accompanying drawing figures.

### Brief Description of the Drawing Figures

The accompanying drawing figures incorporated in and forming a part of this specification illustrate several aspects of the invention, and together with the description serve to explain the principles of the invention.

FIGURE 1 is a block representation of a communication environment according to one embodiment of the present invention.

FIGURE 2 is an exemplary communication flow diagram according to one embodiment of the present invention.

FIGURE 3 is a block representation of a docking station and a mobile terminal according to a first embodiment of the present invention.

FIGURE 4 is a block representation of a docking station and a mobile terminal according to a second embodiment of the present invention.

FIGURE 5 is a block representation of a service node according to one embodiment of the present invention.

### Detailed Description of the Preferred Embodiments

The embodiments set forth below represent the necessary information to enable those skilled in the art to practice the invention and illustrate the best mode of practicing the invention. Upon reading the following description in light of the accompanying drawing figures, those skilled in the art will understand the concepts of the invention and will recognize applications of these concepts not particularly addressed herein. It should be understood that these concepts and applications fall within the scope of the disclosure and the accompanying claims.

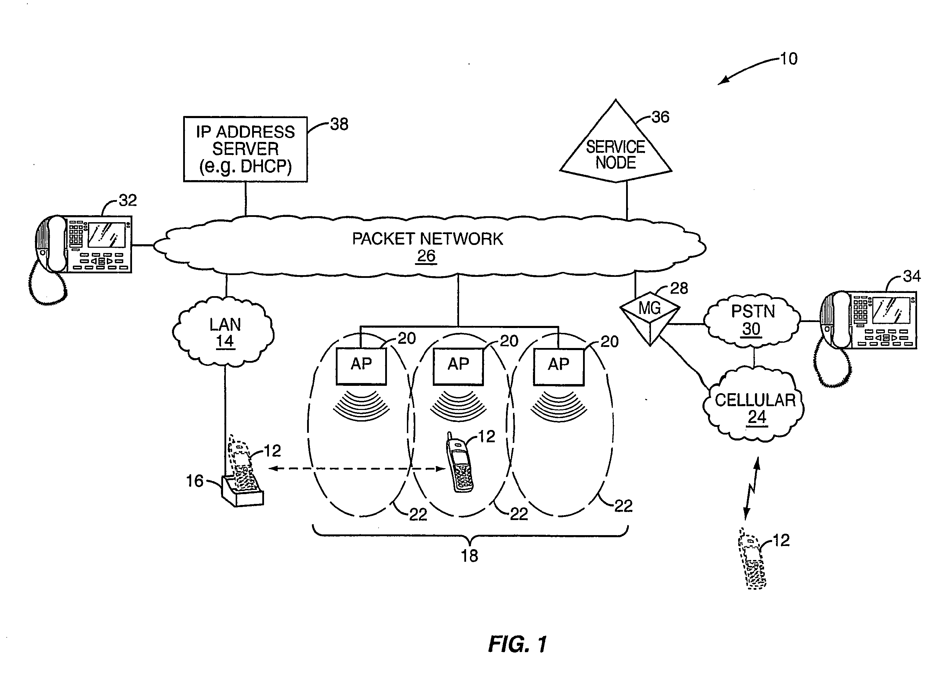

Turning now to Figure 1, a communication network 10 is illustrated according to one embodiment of the present invention, and is configured to support communications with a mobile terminal 12 through both wired and local wireless network interfaces. For the wired interface, the mobile terminal 12 will connect to a local area network (LAN) 14 directly or indirectly via an appropriate docking station 16. The local area network 14 may take the form of a traditional Ethernet-based network, cable network or digital subscriber line (DSL) network. For local wireless communications, the mobile terminal 12 may communicate using an appropriate local wireless communication standard with a local wireless network 18, which is formed by one or more local wireless access points 20. Each access point 20 will provide a limited local wireless zone 22 through which communications with the access point 20 are possible.

In addition to supporting the wired and local wireless communications, the mobile terminal 12 may be configured to support cellular communications through a cellular network 24. Accordingly, the mobile terminal 12 may support wired, local wireless, and cellular communications in one embodiment of the present invention. The LAN 14 may be part of or coupled to a packet network 26, which is directly or indirectly coupled to the local wireless network 18, such that the mobile terminal 12 may facilitate communication sessions over the packet network 26 via the wired or local wireless connections, depending on the location of the mobile terminal 12. The cellular network 24 may be coupled to the packet network 26 via a media gateway 28, which will support interworking between the packet-based communications of the packet network 26 and the circuit-switched connections associated with the cellular network 24. In a similar fashion, a Public Switched Telephone Network (PSTN) 30 may be coupled to the packet network 26 via the media gateway 28, and may also be coupled to the cellular network 24.

In the communication environment 10, the mobile terminal 12 may facilitate communication sessions over the packet network 26, the PSTN 30, and the cellular network 24, via wired, local wireless, or cellular communications. To illustrate some of the flexibility, from the wired, local wireless, or cellular connections, communication sessions may be established with a packet-based telephony terminal 32 as well as a circuit-switched telephony terminal 34. For packet-based communication sessions, and in particular those originating through the wired or local wireless connections, a service node 36 may be involved to facilitate call signaling between the mobile terminal 12 and the media gateway 28 or other packet device. Further, the service node 36 may facilitate various types of call forwarding and routing, depending on the location of the mobile terminal 12. For the present invention, the service node 36 acts as a proxy for the mobile terminal 12, which will register its location with the service node 36 to support both wired and local wireless communications, as will be discussed in greater detail below. For both wired and local wireless communications, the mobile terminal 12 may need to be provided with an Internet Protocol (IP) address. If allocation of an IP address is required, an IP address server 38, such as a Dynamic Host Control Protocol (DHCP) server may be provided to allocate an IP address to the mobile terminal 12 when the mobile terminal 12 is available for wired or local wireless communications.

In operation, the mobile terminal 12 will either have or obtain IP addresses for both wired and local wireless communications. These different IP addresses will be used to facilitate communications with the mobile terminal, depending on location. As noted, the mobile terminal 12 will register with the service node 36 upon connecting to the LAN 14, being docked in the docking station 16, or coming within communication range of one of the access points 20 of the local wireless network 18. For purposes of discussion, assume the wired connection is through the docking station 16 and the local wireless connection is facilitated by one of the access points 20. Further assume that the local wireless network 18 provides coverage over an area in which the docking station 16 is located. Although the placement of the docking station 16 does not have to fall within the local wireless network 18, this configuration illustrates one of the significant benefits of the present invention.

When the mobile terminal 12 is docked in the docking station 16, the mobile terminal 12 will register its LAN-based IP address as its primary contact with the service node 36. When undocked, the mobile terminal 12 will register its local wireless based IP address with the service node 36. The service node 36 will then remove the LAN-based IP address as the primary contact and use the local wireless IP address as the primary contact. Accordingly, the service node 36 can direct incoming calls to the mobile terminal 12 through the appropriate wired or local wireless interface, as well as support outgoing calls with the appropriate IP address for the given wired or local wireless connection. When the docking status changes during an active communication session or just prior to a docking status change, when the user signals to the mobile terminal 12 or docking station 16 she is about to undock the mobile terminal 12, the mobile terminal 12 will take the necessary steps to register with the service node 36 as well as initiate a new communication session with the same party, to effectively continue communications. The new request may contain the same communication ID, as well as provide the new IP address for the mobile terminal 12 through the new network connection.

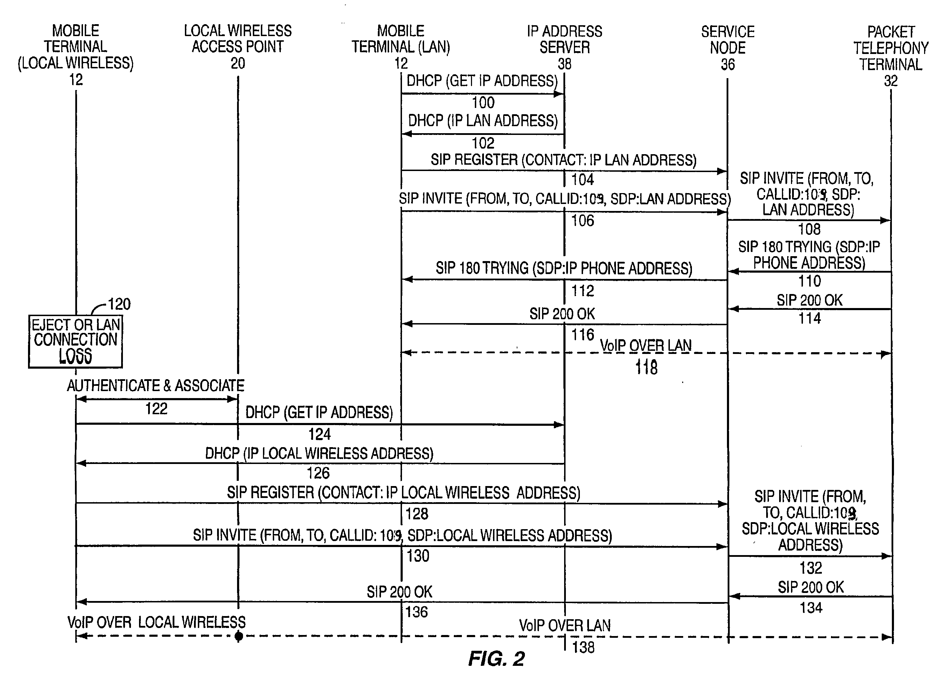

Turning now to Figure 2, a detailed communication flow diagram is provided, wherein the mobile terminal 12 initiates a call to the packet telephony terminal 32 via a wired connection through the LAN 14. Once the communication session with the packet telephony terminal 32 is established, the mobile terminal 12 is removed from the docking station 16 and initiates another communication session with the packet telephony terminal 32 in an effort to continue communications. In this example, the communications between the mobile terminal 12 and the packet telephony terminal 32 consist of a voice-based call, although those skilled in the art will recognize that any type of media session may be supported by the concepts of the present invention. Further assume that the IP address server 38 is a DHCP server, wherein a new IP address is allocated to the mobile terminal 12 upon being connected to the docking station 16 or coming within communication range of an access point 20. The mobile terminal 12 is preferably configured to detect the presence of the docking station 16 when the mobile terminal 12 is physically placed in the docking station 16 or placed sufficiently proximate to the docking station 16 to enable communications. In one embodiment, no docking station 16 is required, and the LAN 14 is accessed by connecting the LAN cable directly into the mobile terminal 12.

The call flow begins when the mobile terminal 12 is placed in the docking station 16 and sends a DHCP request to obtain an IP address to the IP address server 38 (step 100). The IP address server 38 will respond by providing an IP LAN address (step 102). Upon receiving the IP LAN address, the mobile terminal 12 will register with the service node 36 by sending a SIP Register message providing the IP LAN address as the contact information for the mobile terminal 12 (step 104). In this embodiment, the Session Initiation Protocol (SIP) is used for establishing and controlling sessions between the various packet-based entities, including the mobile terminal 12, service node 36, and packet telephony terminal 32.

To initiate a communication session with the packet telephony terminal 32, the mobile terminal 12 will send a SIP Invite message toward the packet telephony terminal 32 (step 106). Assuming the service node 36 acts as a SIP proxy for the mobile terminal 12, the SIP Invite message will be received by the service node 36 and then forwarded to the packet telephony terminal 32 (step 108). The SIP Invite message will identify the call with a call identification (CALLID) number (109), as well as provide Session Data Protocol (SDP) information including the IP LAN address for the mobile terminal 12 and any information identifying the originating (FROM) and terminating (TO) information.

In response to receiving the SIP Invite message, the packet telephony terminal 32 will send a SIP 180 Trying message toward the mobile terminal 12 (step 110). Again, the service node 36 will receive a SIP 180 Trying message from the packet telephony terminal 32 and forward it to the mobile terminal 12 (step 112). In the SDP information in the SIP 180 Trying message, the packet telephony terminal 32 will provide its address, IP PHONE ADDRESS. At this point, the packet telephony terminal 32 will ring until it is answered. Upon being answered, a SIP 200 OK message is sent toward the mobile terminal 12 and received by the service node 36 (step 114), which will forward the SIP 200 OK message to the mobile terminal 12 (step 116). At this point, the mobile terminal 12 and the packet telephony terminal 32 have the requisite information to send and receive packets from each other to support the communication session, which is associated with CALLID: 109. Thus, a voice over IP (VoIP) session is established over the LAN 14 and packet network 26 (step 118).

Assume that during the communication session, the mobile terminal 12 is removed from the docking station 16, and thus the wired connection over the LAN 14 is lost (step 120). At this point, the mobile terminal 12 will recognize that the wired connection is lost and that a local wireless connection is available. As such, the mobile terminal 12 and the appropriate local wireless access point 20 will communicate with one another to authenticate communications and provide an appropriate association therebetween in traditional fashion (step 122). Alternatively, to provide a smoother transition, the mobile terminal 12 or the docking station 16 may have an eject button that the user presses before removing the device from the docking station 16. When the eject button is pressed, the mobile terminal 12 may actively prepare the wireless interface prior to ejection and therefore allow minimum disruption at the transition from wireline to wireless connectivity. Assuming the mobile terminal 12 is not assigned a static IP address for local wireless communications, the mobile terminal 12 will send a DHCP request to the IP address server 38 to obtain an IP address for local wireless communications (step 124). The IP address server 38 will provide the mobile terminal 12 with an appropriate address, IP LOCAL WIRELESS ADDRESS (step 126). Notably, communications with the IP address server 38 are supported via the local wireless network 18 and the packet network 26.

The mobile terminal 12 will then register with the service node 36 using the IP LOCAL WIRELESS ADDRESS (step 128). The mobile terminal will immediately send a SIP Invite message toward the packet telephony terminal 32 to establish a new communication session to support the call (step 130). The SIP Invite message will include the originating (FROM) and terminating (TO) information, as well as the original call identification (CALLID: 109), and will provide the new IP LOCAL WIRELESS ADDRESS, which must be used for communications with the mobile terminal 12. The SIP Invite message is received by the service node 36 and forwarded to the packet telephony terminal 32 (step 132). The packet telephony terminal 32 will respond with a SIP 200 OK message (step 134), acknowledging the change of IP address to use for the session. The SIP 200 OK message is received by the service node 36 and forwarded to the mobile terminal 12 through the local wireless interface (step 136). At this point, a voice over IP session is established between the mobile terminal 12 and the packet telephony terminal 32 (step 138). Notably, local wireless communications are used to facilitate the session between the mobile terminal 12 and the local wireless access point 20.

If the mobile terminal 12 is placed back in the docking station 16 or otherwise connected to the LAN 14, the mobile terminal 16 can obtain another IP LAN address from the IP address server 38, register the IP LAN address with the service node 36, and initiate a new communication session through which to continue the communications. To initiate the new session, a SIP Invite message may be sent with the same CALLID (109). As such, the communications may transition back through the LAN 14 from the local wireless network 18.

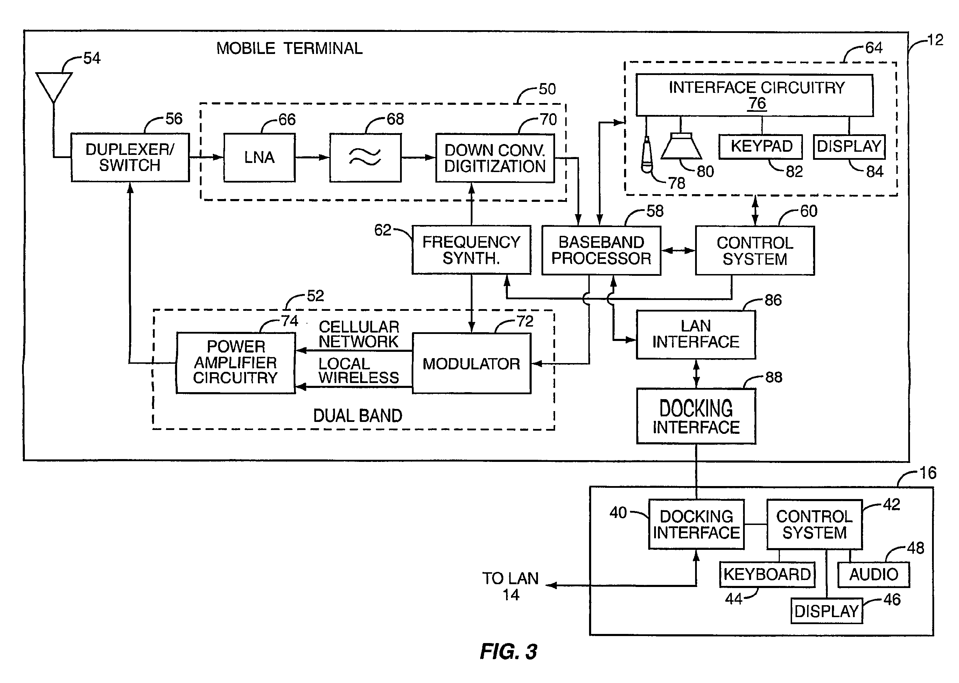

Turning now to Figure 3, block representations of a mobile terminal 12 and a compatible docking station 16 are illustrated. At the heart of the docking station 16 lies a docking interface 40 to which the mobile terminal 12 will engage when docked in the docking station 16. The docking interface 40 will facilitate bidirectional communications between the LAN 14, or other network, and the mobile terminal 12. The docking interface 40 may also provide power to the mobile terminal 12 for operation as well as for recharging batteries. Depending on the sophistication of the docking station 16, a control system 42 may be provided in association with a user interface for the docking station that may include a keyboard 44, display 46, and audio circuitry 48, which may include a microphone and speaker (not shown). The user interface and the control system 42 may interact with the docking interface 40 to facilitate communication sessions over the LAN 14. Thus, the docking station 16 may function as a standalone telephony terminal. Alternatively, the control system 42 may interact with the mobile terminal 12 such that various functions of the mobile terminal 12 may be provided at the docking station 16, such as facilitating a speakerphone function. The docking station 16 may include additional ports and a hub to facilitate connections with multiple devices.

In one embodiment, the control system 42 is configured to detect when a certain button or key on the keyboard is pressed to alert the mobile terminal 12 of an impending removal of the mobile terminal 12 from the docking station 16. Thus, the mobile terminal 12 can take the necessary steps to prepare for local wireless communications, as described above. Further, the docking station 16 may cooperate with the mobile terminal 12 to facilitate or otherwise assist in registration as well as the setup and establishment of communication sessions.

The basic architecture of the mobile terminal 12 may include a receiver front end 50, a radio frequency transmitter section 52, an antenna 54, a duplexer or switch 56, a baseband processor 58, a control system 60, a frequency synthesizer 62, and a user interface 64. The receiver front end 50 receives information bearing radio frequency signals from one or more remote transmitters provided by a base station. A low noise amplifier 66 amplifies the signal. A filter circuit 68 minimizes broadband interference in the received signal, while downconversion and digitization circuitry 70 downconverts the filtered, received signal to an intermediate or baseband frequency signal, which is then digitized into one or more digital streams. The receiver front end 50 typically uses one or more mixing frequencies generated by the frequency synthesizer 62. The baseband processor 58 processes the digitized received signal to extract the information or data bits conveyed in the received signal. This processing typically comprises demodulation, decoding, and error correction operations. As such, the baseband processor 58 is generally implemented in one or more digital signal processors (DSPs).

On the transmit side, the baseband processor 58 receives digitized data, which may represent voice, data, or control information, from the control system 60, which it encodes for transmission. The encoded data is output to the transmitter 52, where it is used by a modulator 72 to modulate a carrier signal that is at a desired transmit frequency. Power amplifier circuitry 74 amplifies the modulated carrier signal to a level appropriate for transmission, and delivers the amplified and modulated carrier signal to the antenna 54 through the duplexer or switch 56. The control system 60 will operate to provide the functions described above that embody the concepts of the invention. The control system 60 may be integrated or distributed among different processing circuitry and include the functionality of the baseband processor 58 and other functions of the mobile terminal 12.

As noted above, the mobile terminal 12 may be able to communicate with the wireless access points 20 as well as with the cellular network 24. Accordingly, the receiver front end 50, baseband processor 58, and radio frequency transmitter section 52 cooperate to provide either a wireless interface for the cellular network 24 or the local wireless interface for the wireless access points 20. These functions may be implemented using redundant circuitry, or by configuring common circuitry to operate in different modes. The configuration of the mobile terminal 12 will be dictated by economics and designer choice.

A user may interact with the mobile terminal 12 via the interface 64, which may include interface circuitry 76 associated with a microphone 78, a speaker 80, a keypad 82, and a display 84. The interface circuitry 76 typically includes analog-to-digital converters, digital-to-analog converters, amplifiers, and the like. Additionally, it may include a voice encoder/decoder, in which case it may communicate directly with the baseband processor 58. The microphone 78 will typically convert audio input, such as the user's voice, into an electrical signal, which is then digitized and passed directly or indirectly to the baseband processor 58. Audio information encoded in the received signal is recovered by the baseband processor 58, and converted by the interface circuitry 76 into an analog signal suitable for driving the speaker 80. The keypad 82 and display 84 enable the user to interact with the mobile terminal 12, input numbers to be dialed; access and select addresses, dialing plans, and originating party IDs; select from a number of available networks to use for communications; as well as provide traditional control of the mobile terminal 12.

In addition to or in lieu of the local wireless and cellular interfaces, the mobile terminal 12 may have other communication interfaces, such as a LAN interface 86, to facilitate wired communications. The LAN interface 86 may be configured to connect directly to the LAN 14 or to the docking station 16 via a docking interface 88. When the docking interface 88 is used, the mobile terminal can connect to the docking interface 40 of the docking station 16 wherein a connection to the LAN 14 is provided. As noted, the docking interface 40 can provide power to the mobile term inal 12 as well as a mechanism to exchange instructions and other information between the docking station 16 and the mobile terminal 12.

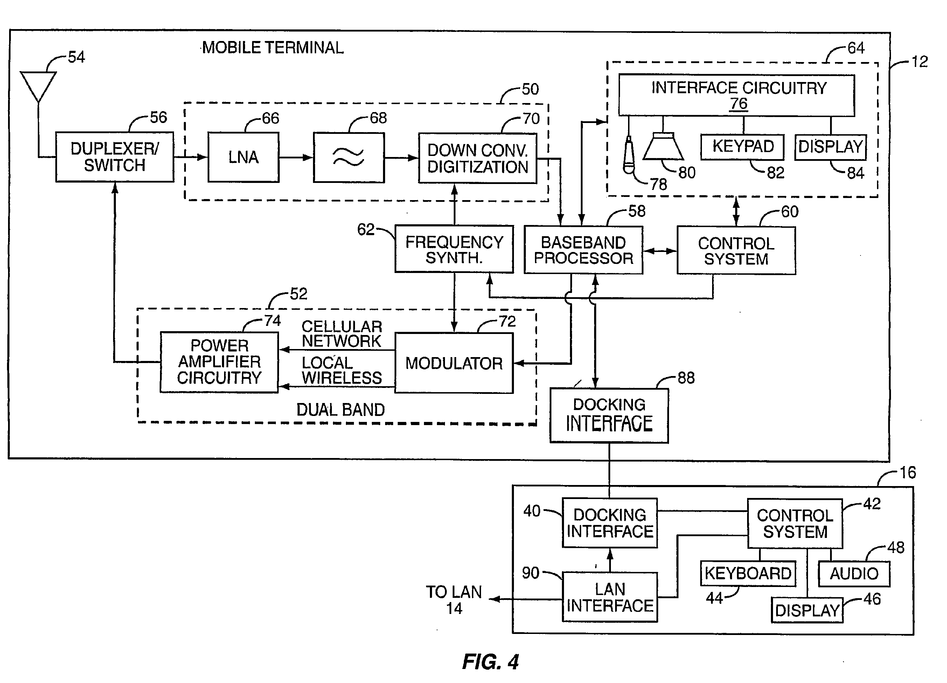

An alternative embodiment of the mobile terminal 12 and docking station 16 is illustrated in Figure 4. In particular, the mobile terminal 12 does not include the LAN interface 86. Instead, the docking interface 88 cooperates with the baseband processor 58 and control system 60 to direct communications intended for the LAN 14 through the docking interface 88. The docking interface 88 can take many forms, such as a serial or parallel port, USB port or Firewire port. The docking station 16 in this case takes the form of a personal computer with the docking interface 40, such as a USB interface, the control system 42 with associated standard peripherals such as the audio interface 48, display 46 and keyboard 44, and will also include a LAN interface 90 to provide the necessary signal processing to facilitate communications over the LAN 14 or other network through a wired connection. The LAN interface 90 may provide an Ethernet-based interface.

For additional information pertaining to multimode terminals and associated communications, please see U.S. application serial number 10/409,280 filed April 8, 2003 entitled INTEGRATED WIRELINE AND WIRELESS SERVICE, U.S. application serial number 10/409,290 filed April 8, 2003 entitled CALL TRANSFER FOR AN INTEGRATED WIRELINE AND WIRELESS SERVICE; U.S. application serial number 10/693,540 filed October 24, 2003 entitled CALL TRANSFER FOR AN INTEGRATED WIRELINE AND WIRELESS SERVICE USING A TEMPORARY DIRECTORY NUMBER; U.S. application serial number 10/693,539 filed October 24, 2003 entitled CALL TRANSFER FOR AN INTEGRATED WIRELINE AND WIRELESS SERVICE USING A TEMPORARY DIRECTORY NUMBER; and U.S. application serial number 10/784,743 filed February 23, 2004 entitled CALL TRANSFER FOR AN INTEGRATED WIRELINE AND WIRELESS SERVICE, the disclosures of which are incorporated herein by reference in their entireties.

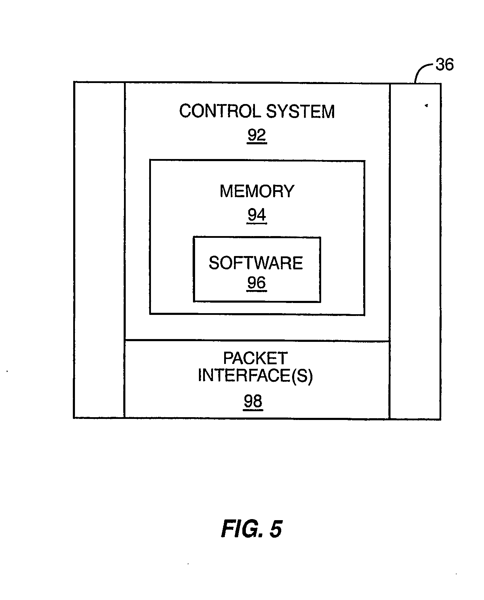

Turning now to Figure 5, a block representation of a service node 36 is illustrated according to one embodiment of the present invention. The service node 36 will include a control system 92 having memory 94 sufficient for storing software 96 providing the functionality of the service node 36. The control system 92 will also be associated with one or more packet interfaces 98 to facilitate communications with the mobile terminal 12 via the wired and local wireless networks, as well as other packet-based entities. In other embodiments, the mobile terminal 12 may be able to communicate with the service node 36 via the cellular network 24.

Those skilled in the art will recognize improvements and modifications to the preferred embodiments of the present invention. All such improvements and modifications are considered within the scope of the concepts disclosed herein and the claims that follow.

## Claims

1. A mobile terminal (12) comprising:
a) a first interface (88) in the mobile terminal and adapted to facilitate communications via a wired connection to a service node (36) via a first communication network (14), wherein the first interface is adapted to couple to the first communication network such that the wired connection is facilitated through the first interface;
b) a second interface (50, 52, 58) in the mobile terminal and adapted to facilitate local wireless communications using a wireless connection to the service node via a second communication network (18), wherein communications via the first interface are associated with a first address, and communications via the second interface are associated with a second address; and
c) a control system (60) operatively associated with the first and second interfaces and adapted to:
(i) select the first interface for establishing a first session for a communication over the first communication network, when the wired connection via the first interface is available (100);
(ii) establish the first session for the communication with an entity via the first interface, wherein the first session is identified with a communication ID (102-108);
(iii) recognize when communications via the first interface will no longer be possible (120);
(iv) initiate and establish a second session for the communication with the entity via the second interface, wherein the second session is identified with the same communication ID;
(v) register with the service node in association with the first address when the wired connection via the first interface is available (104); and
(vi) register with the service node in association with the second address in response to recognizing that communications via the first interface will no longer be possible prior to the wired connection via the first interface becoming unavailable (128).

2. The mobile terminal of claim 1, wherein the control system is further adapted to determine if the wired connection via the first interface is available.

3. The mobile terminal of claim 1, wherein the control system is further adapted to register with the service node in association with the second address when the wired connection via the first interface is not available.

4. The mobile terminal of claim 1, wherein the control system is further adapted to register with the service node in association with the second address prior to initiating local wireless communications via the second interface.

5. The mobile terminal of claim 1, wherein the control system is further adapted to obtain the first address after detecting an ability to communicate via the first interface, and obtain the second address after detecting an ability to communicate via the second interface.

6. The mobile terminal of claim 1, wherein the first interface is a docking interface adapted to couple to a docking station, which connects to the first communication network, wherein the wired connection is facilitated through the docking station.

7. The mobile terminal of claim 6, wherein the first interface further comprises a network interface coupled to the docking interface.

## Patentansprüche

1. Mobiles Endgerät (12), umfassend:
a) eine erste Schnittstelle (88) in dem mobilen Endgerät und eingerichtet, Kommunikationen über eine drahtgebundene Verbindung mit einem Dienstknoten (36) über ein erstes Kommunikationsnetzwerk (14) zu ermöglichen, wobei die erste Schnittstelle eingerichtet ist zum Koppeln an das erste Kommunikationsnetzwerk so, dass die drahtgebundene Verbindung durch die erste Schnittstelle ermöglicht ist;
b) eine zweite Schnittstelle (50, 52, 58) in dem mobilen Endgerät und eingerichtet, lokale drahtlose Kommunikationen unter Verwendung einer drahtlosen Verbindung mit dem Dienstknoten über ein zweites Kommunikationsnetzwerk (18) zu ermöglichen, wobei die Kommunikationen über die erste Schnittstelle mit einer ersten Adresse assoziiert werden, und Kommunikationen über die zweite Schnittstelle mit einer zweiten Adresse assoziiert werden; und
c) ein Steuersystem (60), das operativ mit der ersten und der zweiten Schnittstelle assoziiert ist und eingerichtet ist zum:
(i) Auswählen der ersten Schnittstelle zum Errichten einer ersten Sitzung für eine Kommunikation über das erste Kommunikationsnetzwerk, wenn die drahtgebundene Verbindung über die erste Schnittstelle vorhanden ist (100);
(ii) Errichten der ersten Sitzung für die Kommunikation mit einer Einheit über die erste Schnittstelle, wobei die erste Sitzung mit einer Kommunikations-ID identifiziert ist (102-108);
(iii) Erkennen, wenn Kommunikationen über die erste Schnittstelle nicht länger möglich sein werden (120);
(iv) Initiieren und Errichten einer zweiten Sitzung für die Kommunikation mit der Einheit über die zweite Schnittstelle, wobei die zweite Sitzung mit derselben Kommunikations-ID identifiziert ist;
(v) Registrieren bei dem Dienstknoten, der mit der ersten Adresse assoziiert ist, wenn die drahtgebundene Verbindung über die erste Schnittstelle verfügbar ist (104); und
(vi) Registrieren bei dem Dienstknoten, der mit der zweiten Adresse assoziiert ist, in Reaktion auf ein Erkennen, dass Kommunikationen über die erste Schnittstelle nicht länger möglich sein werden, bevor die erste drahtgebundene Verbindung über die erste Schnittstelle nicht mehr verfügbar ist (128).

2. Mobiles Endgerät nach Anspruch 1, wobei das Steuersystem ferner eingerichtet ist zum Ermitteln, ob die drahtgebundene Verbindung über die erste Schnittstelle verfügbar ist.

3. Mobiles Endgerät nach Anspruch 1, wobei das Steuersystem ferner eingerichtet ist zum Registrieren bei dem Dienstknoten, der mit der zweiten Adresse assoziiert ist, wenn die drahtgebundene Verbindung über die erste Schnittstelle nicht verfügbar ist.

4. Mobiles Endgerät nach Anspruch 1, wobei das Steuersystem ferner eingerichtet ist zum Registrieren bei dem Dienstknoten, der mit der zweiten Adresse assoziiert ist, vor einem Initiieren lokaler drahtloser Kommunikationen über die zweite Schnittstelle.

5. Mobiles Endgerät nach Anspruch 1, wobei das Steuersystem ferner eingerichtet ist zum Beziehen der ersten Adresse nach einem Erkennen einer Möglichkeit zum Kommunizieren über die erste Schnittstelle, und Beziehen der zweiten Adresse nach einem Erkennen einer Möglichkeit zum Kommunizieren über die zweite Schnittstelle.

6. Mobiles Endgerät nach Anspruch 1, wobei die erste Schnittstelle eine Dockingschnittstelle ist, die eingerichtet ist zum Koppeln an eine Dockingstation, welche mit dem ersten Kommunikationsnetzwerk verbindet, wobei die drahtgebundene Verbindung durch die Dockingstation ermöglicht ist.

7. Mobiles Endgerät nach Anspruch 6, wobei die erste Schnittstelle ferner eine Netzwerkschnittstelle umfasst, die mit der Dockingschnittstelle gekoppelt ist.

## Revendications

1. Un terminal mobile (12) comprenant :
a) une première interface (88) dans le terminal mobile et apte à faciliter des communications via une liaison filaire vers un noeud de service (36) via un premier réseau de communication (14), la première interface étant apte à se coupler au premier réseau de communication de sorte que la connexion filaire soit facilitée par l'intermédiaire de la première interface ;
b) une seconde interface (50, 52, 58) dans le terminal mobile et apte à faciliter des communications sans fil locales en utilisant une liaison sans fil au noeud de service via un second réseau de communication (18), les communications via la première interface étant associées à une première adresse, et les communications via la seconde interface étant associées à une seconde adresse ; et
c) un système de contrôle (60) associé de manière opérante à la première et à la seconde interface et apte à :
i) sélectionner la première interface pour établir une première session pour une communication sur le premier réseau de communication, lorsque la connexion filaire via la première interface est disponible (100) ;
ii) établir la première session pour la communication avec une entité via la première interface, la première session étant identifiée par un ID de communication (102-108) ;
iii)reconnaitre le moment où les communications via la première interface ne pourront plus être possibles (120) ;
iv) instaurer et établir une seconde session pour la communication avec l'entité via la seconde interface, la seconde session étant identifiée avec le même ID de communication ;
v) s'enregistrer auprès du noeud de service en association avec la première adresse lorsque la connexion filaire via la première interface est disponible (104) ; et
vi) s'enregistrer auprès du noeud de service en association avec la seconde adresse en réponse à la reconnaissance de ce que les communications via la première interface ne pourront plus être possibles avant que la connexion filaire via la première interface ne devienne indisponible (128).

2. Le terminal mobile de la revendication 1, dans lequel le système de contrôle est en outre apte à déterminer si la connexion filaire via la première interface est disponible.

3. Le terminal mobile de la revendication 1, dans lequel le système de contrôle est en outre apte à s'enregistrer auprès du noeud de service en association avec la seconde adresse lorsque la connexion filaire via la première interface n'est pas disponible.

4. Le terminal mobile de la revendication 1, dans lequel le système de contrôle est en outre apte à s'enregistrer auprès du noeud de service en association avec la seconde adresse avant d'instaurer des communications sans fil locales via la seconde interface.

5. Le terminal mobile de la revendication 1, dans lequel le système de contrôle est en outre apte à obtenir la première adresse après avoir détecté une aptitude à communiquer via la première interface, et à obtenir la seconde adresse après avoir détecté une aptitude à communiquer via la seconde interface.

6. Le terminal mobile de la revendication 1, dans lequel la première interface est une interface d'accueil apte à un couplage sur une station d'accueil, qui se connecte au premier réseau de communication, la connexion filaire étant facilitée via la station d'accueil.

7. Le terminal mobile de la revendication 6, dans lequel la première interface comprend en outre une interface réseau couplée à l'interface d'accueil.
